# EUROPÄISCHE PATENTSCHRIFT

(11) **EP 3 145 696 B1**
(45) Veröffentlichungstag und Bekanntmachung des Hinweises auf die Patenterteilung: **22.08.2018**
(21) Anmeldenummer: 15725540.7
(22) Anmeldetag: 13.05.2015
(51) Int. Cl.: B29C 65/04, B65B 51/22

(54) **VERFAHREN UND VORRICHTUNG ZUM HEISSVERSIEGELN VON MEHREREN LAGEN EINES LAMINATS**
METHOD AND DEVICE FOR HOT SEALING MULTIPLE PLIES OF A LAMINATE
PROCÉDÉ ET DISPOSITIF DE THERMOSCELLAGE DE PLUSIEURS COUCHES D'UN STRATIFIÉ

(30) Priorität: 21.05.2014 DE 102014107157
(43) Veröffentlichungstag der Anmeldung: 29.03.2017
(73) Patentinhaber: Elopak AS, 3431 Spikkestad (NO)
(72) Erfinder: MACH, Martin, 33033 Mesto Touskov (CZ); BÖHME, Thomas, 01277 Dresden (DE); MIKULSKI, Sebastian, 30169 Hannover (DE)
(74) Vertreter: Kohlmann, Kai
(86) Internationale Anmeldenummer: PCT/EP2015/060690
(87) Internationale Veröffentlichungsnummer: WO 2015/177036

(56) Entgegenhaltungen:
- WO-A2-2013/093505
- DE-A1- 2 324 810
- JP-A- H0 858 739
- US-A- 2 434 325
- US-A- 4 895 457

## Beschreibung

Die Erfindung betrifft ein Verfahren und eine Vorrichtung zum Heißversiegeln mehrerer Lagen eines Laminats nach den Oberbegriffen der Ansprüche 1 und 8, wobei das Laminat eine Trägerschicht aus elektrisch nicht leitendem Material und eine Versiegelungsschicht aus thermoplastischem Material an mindestens einer Oberfläche des Laminats umfasst.

Für Verpackungen von flüssigen Lebensmitteln kommen häufig Laminate als Verpackungsmaterial zum Einsatz, die eine Trägerschicht aus elektrisch nicht leitendem Material, insbesondere Papier oder Karton, und eine Versiegelungsschicht aus thermoplastischem Material, insbesondere thermoplastischer Kunststoff, wie beispielsweise Polyethylen oder Polypropylen, umfassen. Das thermoplastische Material ist flüssigkeitsdicht und widerstandsfähig gegen fettige Substanzen und Säuren. Darüber hinaus ist das thermoplastische Material heißversiegelbar, in dem einander zugewandte Versiegelungsschichten aus dem thermoplastischem Material gegeneinander gelegt und durch Anwendung von Wärme unter gleichzeitigem Zusammenpressen mehrerer Lagen des Laminats in einem Siegelbereich miteinander verschweißt werden.

Die Wärme zum Heißversiegeln wird durch die Lagen des Laminats von außen an die innen liegenden Versiegelungsschichten herangeführt. Bei den geforderten kurzen Versiegelungszeiten der Verpackungen in modernen Abfüllmaschinen kann die ausreichende Wärmezufuhr Schwierigkeiten bereiten.

Soweit das Laminat eine Metallschicht, insbesondere eine Aluminiumschicht, aufweist, kann die Wärme für das Heißversiegeln durch Induktion erzeugt werden, in dem in Pressbalken zum Zusammenpressen der Lagen des Laminats Spulen eingebaut werden, die in der Metallschicht des Laminats elektrische Ströme induzieren und diese erhitzen. Durch Wärmeleitung wird die Wärme von der erhitzten Metallschicht auf die angrenzenden Schichten aus thermoplastischem Material übertragen, die unter Einwirkung der Wärme in den schmelzflüssigen Zustand gelangen.

Zunehmend kommen Laminate für Verpackungen zum Einsatz, die auch ohne eine Metallschicht gasdicht und aromakonservierende Eigenschaften haben. Es besteht daher ein Bedürfnis, die Wärme für das Heißversiegeln auch ohne eine Metallschicht in dem Laminat effektiv zu erzeugen. Die DE 23 24 810 schlägt vor, die Wärme durch dielektrische Verluste zu erzeugen, die auftreten, wenn das Laminat einem hochfrequenten elektrischen Wechselfeld in einer Größenordnung von 300 bis 600 MHz in dem Siegelbereich ausgesetzt wird. Die Verlustwärme basiert insbesondere auf einer Orientierungspolarisation von Molekülen mit Dipoleigenschaften in dem elektrisch nicht leitenden Material der Trägerschicht des Laminats. Neben der Orientierungspolarisation kommt es in dem elektrischen Wechselfeld zu einer Ionen- und Elektronenpolarisation.

Zur Erwärmung werden die Lagen des Laminats in dem Siegelbereich zwischen einer Elektrode und einer Gegenelektrode dem hochfrequenten Wechselfeld ausgesetzt. Die beiden Elektroden bilden einen Kondensator, wobei das elektrisch nicht leitende Material der Laminate das Dielektrikum bildet.

Der Heißversiegelungsprozess in einem hochfrequenten elektrischen Wechselfeld wird durch die Parameter Siegelzeit, Anpressdruck auf die Lagen in dem Siegelbereich, die Materialeigenschaften des zu siegelnden Laminats, die Größe der einander zugewandten Oberflächen von Elektrode und Gegenelektrode, den Abstand zwischen den Oberflächen sowie die Leistung der HF-Spannungsversorgung bestimmt.

Als Materialeigenschaften sind insbesondere die relative Dielektrizitätszahl sowie der Verlustfaktor des Laminats entscheidend. Die relative Dielektrizitätszahl des Laminats sagt aus, um wie viel größer die Kapazität des durch Elektrode und Gegenelektrode gebildeten Kondensators ist, wenn der Zwischenraum zwischen den Elektroden anstelle von Luft mit dem Laminat als Dielektrikum ausgefüllt ist. Der Verlustfaktor tan α ist ebenfalls eine physikalische Materialeigenschaft des Laminats. Um eine hinreichende Wärmeentwicklung durch dielektrische Verluste zu erreichen, sollte der Verlustfaktor tan α in der Größenordnung > 0,01 liegen.

Problematisch ist das Heißversiegeln im hochfrequenten elektrischen Wechselfeld, wenn die Anzahl der Lagen des Laminats in dem Siegelbereich variiert. Sofern beispielsweise als Giebelverpackungen ausgestaltete Verpackungen für Getränke zum Verschließen des Giebels nach dem Füllprozess heißversiegelt werden, befinden sich bei üblichen Packungszuschnitten im unteren Teil des Siegelbereichs vier und in einem Überlappungsbereich sogar fünf Lagen des Laminats, während sich im oberen Teil des Siegelbereichs lediglich zwei Lagen des Laminats gegenüberliegen. Bei vorgegebener kurzer Siegelzeit kann es bei derartigen Giebelverpackungen zu einer nicht ausreichenden Heißversiegelung im unteren Teil des Siegelbereichs und/oder zu einer Überhitzung im oberen Teil des Siegelbereichs kommen. In Folge dessen kann der Verschluss der Verpackung undicht sein, was im Hinblick auf die Lagerfähigkeit des Füllgutes nicht akzeptabel ist.

Die US 4,895,457 A offenbart einen Packungsbehälter mit einer Füllöffnung, wobei zumindest die Füllöffnung mit einem RFsiegelbaren Polymer versehen ist, um die Packungsöffnung mithilfe eines hochfrequenten elektrischen Wechselfeldes versiegeln zu können.

Die JP H08 58739 A beschreibt ein Verfahren zum Heißversiegeln einer Giebelverpackung, wobei in einem ersten thermischen Behandlungsschritt die Siegelflächen der Giebelverpackung vorgeheizt werden. In einem zweiten thermischen Behandlungsschritt werden die Siegelflächen durch Pressbacken gegeneinander gedrückt und einem hochfrequenten elektrischen Wechselfeld ausgesetzt, um die Giebelverpackung hermetisch zu verschließen.

Die US 2,434,325 A offenbart eine Vorrichtung zum Heißversiegeln eines Giebelverschlusses einer Giebelverpackung. Die Vorrichtung umfasst zumindest an ihrem Umfang elektrisch leitende Rollen, die an zwei sich von einem Haltewinkel senkrecht nach unten erstreckenden Wellen angeordnet sind. Über die Wellen werden die Rollen intermittierend und simultan in Drehung versetzt. Eine der beiden Rollen ist in Richtung der anderen Rolle hin- und her beweglich angeordnet, wobei elastische Mittel die bewegliche Rolle in Richtung der feststehenden Rolle kraftbeaufschlagen. Schließlich weist die
Vorrichtung Mittel zum Erzeugen eines hochfrequenten elektrischen Feldes in einem Spalt zwischen den beiden Rollen auf. Zum Versiegeln gelangen die Siegelbereiche der zu versiegelnden Lagen des Giebelverschlusses in den Spalt. In dem Siegelspalt bewirkt das hochfrequente elektrische Wechselfeld zwischen den rotierenden Rollen, dass das thermoplastische Material der aneinander anliegenden Lagen schmilzt und hierdurch der Giebelverschluss verschlossen wird.

Aus der WO 2013/093505 A2 ist eine Vorrichtung zum Heißversiegeln der Siegelfinnen von Giebelverpackungen bekannt, die eine erste Siegelbacke und eine in Richtung der ersten Siegelbacke hin- und her bewegliche zweite Siegelbacke aufweist, wobei die erste Siegelbacke eine Induktionsspule aufweist, die in einen magnetischen Konzentrator eingebettet ist.

Ausgehend von diesem Stand der Technik liegt der Erfindung die Aufgabe zu Grunde, ein Verfahren und eine Vorrichtung zum Heißversiegeln mehrerer Lagen eines Laminats in einem hochfrequenten elektrischen Wechselfeld zu schaffen, bei dem Probleme durch einen zu großen oder zu kleinen Wärmeeintrag in die zu versiegelnden Lagen des Laminats vermieden werden.

Die Lösung dieser Aufgabe basiert auf der Erkenntnis, dass im Interesse kurzer Taktzeiten die Parameter des Heißversiegelungsprozesses Anpressdruck, Siegelzeit sowie Abstand und Größe der einander zugewandten Flächen der Elektroden zur Erzeugung eines hochfrequenten elektrischen Wechselfeldes praktisch nicht veränderbar sind. Die Siegelzeit für das Verschließen der Verpackung ist so kurz wie möglich und der Anpressdruck so hoch wie möglich. Der Siegelbereich und damit die Größe und der Abstand der Elektroden wird weitgehend durch die Anordnung und Anzahl der heißzuversiegelnden Lagen des Laminats, beispielsweise im Bereich des Giebels der Verpackung bestimmt.

Um gleichwohl Probleme durch einen quantitativ falschen Wärmeeintrag zu vermeiden, wird bei einem Verfahren der eingangs erwähnten Art vorgeschlagen, dass das elektrische Wechselfeld in einem ersten Teilbereich des Siegelbereichs mit einer ersten Leitung der HF-Spannungsversorgung und in mindestens einem zweiten Teilbereich des Siegelbereichs mit einer von der ersten Leitung abweichenden zweiten Leistung der HF-Spannungsversorgung erzeugt wird, so dass sich eine unterschiedliche Wärmeverteilung über die Teilbereiche des Siegelbereichs ergibt. Die unterschiedliche Wärmeverteilung in den Teilbereichen erlaubt eine gezielte Anpassung an den in den jeweiligen Teilbereichen geforderten Wärmebedarf. Die Teilbereiche sind beispielsweise in vertikaler Richtung übereinander und in horizontaler Richtung voneinander getrennt angeordnet.

Um das elektrische Wechselfeld in den Teilbereichen des Siegelbereichs mit unterschiedlichen Leistungen erzeugen zu können, weist eine Vorrichtung zum Heißversiegeln der eingangs erwähnten Art ein erstes Versiegelungselement, das mindestens eine erste und mindestens eine zweite Elektrode aufweist, ein zweites Versiegelungselement, das mindestens eine Gegenelektrode aufweist, ein zwischen den Elektroden und der mindestens eine Gegenelektrode angeordneten Siegelbereich zum Heißversiegeln der Lagen des Laminats, einen Antrieb zur Erzeugung einer Relativbewegung der Versiegelungselemente zueinander sowie zum Aufbau einer Anpresskraft auf die Lagen des Laminats in dem Siegelbereich, sowie eine Hochfrequenz-Spannungsversorgung auf, die derart eingerichtet ist, dass die Höhe der an der ersten Elektrode und der mindestens einen Gegenelektrode anliegenden Spannung von der Höhe der an der zweiten Elektrode und der mindestens einen Gegenelektrode anliegenden Spannung abweicht. Um die unterschiedlichen Leistungen zu erzeugen, kann die Hochfrequenz-Spannungsversorgung auch derart eingerichtet sein, dass die Höhe der an der ersten Elektrode und der mindestens einen Gegenelektrode anliegenden Frequenz von der Höhe der an der zweiten Elektrode und der mindestens einen Gegenelektrode anliegenden Frequenz abweicht.

Eine unterschiedliche Wärmeverteilung in den Teilbereichen des Siegelbereichs kann erforderlich sein, wenn in dem ersten und dem zweiten Teilbereich eine unterschiedliche Anzahl von Lagen des Laminats heiß versiegelt werden sollen, wie dies beispielsweise bei dem Heißversiegeln von Giebelverpackungen für Getränke der Fall ist. Darüber hinaus kann sich das Bedürfnis nach einer unterschiedlichen Wärmeverteilung in Teilbereichen des Siegelbereichs daraus ergeben, dass die heiß zu versiegelnden Laminate in den Teilbereichen eine unterschiedliche Dicke aufweisen.

Die unterschiedlichen Leistungen zur Erzeugung des elektrischen Wechselfeldes in den Teilbereichen des Siegelbereichs wird vorzugsweise in Abhängigkeit von der Anzahl und/oder Dicke der Lagen des Laminats bestimmt, die in dem jeweiligen Teilbereich heiß versiegelt werden. In dem Teilbereich, in dem die Heißversiegelung durch eine größere Anzahl von Lagen des Laminats hindurch erfolgen muss, wird eine höhere Leistung zur Erzeugung des Wechselfeldes als in dem Teilbereich benötigt, in dem die Heißversiegelung durch eine geringere Anzahl von Lagen des Laminats hindurch erfolgen muss.

Die Steuerung der Leistung zur Erzeugung des elektrischen Wechselfeldes in dem jeweiligen Teilbereich kann nicht nur in Abhängigkeit der Anzahl und/oder Dicke der Lagen, sondern darüber hinaus in Abhängigkeit von einer in jeden Teilbereich während des Heißsiegelns erfassten Temperatur bestimmt werden. Die Temperatur im Heißsiegelbereich ist maßgeblich für das Aufschmelzen der Versiegelungsschicht(en). Durch gezieltes Messen der Temperatur in den Teilbereichen lässt sich die Leistung zur Erzeugung des elektrischen Wechselfeldes noch genauer steuern und dadurch die Qualität der Heißversiegelung im gesamten Siegelbereich verbessern.

Während des Heißsiegelns, nimmt die Dicke der zu siegelnden Laminate ab. Um in Folge der Abnahme der Dicke eine Veränderung des Siegelparameters "Anpressdruck" zu vermeiden, wird in einer vorteilhaften Ausgestaltung der Erfindung die Kraft zum Zusammenpressen der Lagen des Laminats während des Heißsiegelns konstant gehalten. Hierzu wird der Antrieb der Pressbalken mit einer Kraftregelung ausgestattet.

Das hochfrequente elektrische Wechselfeld in den Siegelbereich wird nur während einer kurzen Zeitspanne des Heißversiegelungsprozesses erzeugt. Während einer Nachpress- und Abkühlphase wird indes kein elektrisches Wechselfeld mehr in dem Siegelbereich erzeugt.

Um eine unterschiedliche Erwärmung durch einen ungleichmäßigen Anpressdruck in Teilbereichen des Siegelbereichs zu vermeiden, werden die Lagen des Laminats in jedem Teilbereich des Siegelbereichs vorzugsweise mit übereinstimmendem Anpressdruck zusammengepresst. Um bei konstanter Anpresskraft in sämtlichen Siegelbereichen einen übereinstimmenden Anpressdruck zu erzeugen, kann der Abstand der kraftbeaufschlagten Elektroden in den Teilbereichen des Siegelbereichs voneinander abweichen. In Teilbereichen, in denen eine größere Anzahl von Lagen des Laminats heiß versiegelt werden, ist der Abstand zwischen der Elektrode und der Gegenelektrode größer als in den Teilbereichen des Siegelbereichs, in denen eine geringere Anzahl von Lagen heiß versiegelt werden.

Um die erforderliche Versiegelungswärme innerhalb einer kurzen Zeit zu erzeugen, wird das hochfrequente elektrische Wechselfeld vorzugsweise in einem Frequenzband zwischen 3 MHz und 300 MHz erzeugt. Üblicherweise werden in dem vorgenannten Frequenzband die Standardfrequenzen 13,56 MHz, 27,12 MHz und 40,68 MHz verwendet. Die drei vorgenannten Frequenzen sind für industrielle, wissenschaftliche und medizinische Zwecke reserviert. Oberhalb der Standardfrequenz 40,68 MHz liegende Frequenzen sind insbesondere für Materialien mit niedrigem Verlustfaktor zweckmäßig, um gleichwohl die erforderliche Leistung für ein rasches Heißversiegeln zur Verfügung zu stellen.

Die zur Durchführung des Verfahrens erforderliche Hochfrequenz-Spannungsversorgung ist bei gegebener Frequenz derart eingerichtet, dass die Höhe der an der ersten Elektrode und der mindestens einen Gegenelektrode anliegenden HF-Spannung von der Höhe der an der zweiten Elektrode und der mindestens einen Gegenelektrode anliegende HF-Spannung abweicht. Hieraus resultieren die unterschiedlichen Leistungen, mit denen die elektrischen Wechselfelder in den Teilbereichen des Siegelbereichs erzeugt werden. Um die unterschiedlichen Leistungen zu erzeugen, kann, wie bereits eingangs erwähnt, auch die Höhe der an der ersten Elektrode und der mindestens einen Gegenelektrode anliegenden Frequenz von der Höhe der an jeder zweiten Elektrode und der mindestens einen Gegenelektrode anliegenden Frequenz abweichen.

Die Hochfrequenzspannungsversorgung weist einen HF-Generator zur Erzeugung einer hochfrequenten Spannung auf. Der HF-Generator ist vorzugsweise über verlustarme, abgeschirmte Leitungen mit jeder Gegenelektrode an dem zweiten Versiegelungselement und jeder ersten oder jeder zweiten Elektrode an dem ersten Versiegelungselement elektrisch leitend verbunden. Als verlustarme, abgeschirmte Leitungen, kommen insbesondere Koaxialkabel mit einer Impedanz von 50 Ω zum Einsatz. Die Impedanz setzt sich aus dem Ohmschen Widerstand der Leitung und dem Blindwiderstand zusammen, der von der Frequenz des HF-Generators abhängig ist. In der Hochfrequenztechnik wird hauptsächlich eine Impedanz von 50 Ω verwendet. Diese Impedanz gilt als guter Kompromiss zwischen der zu übertragenden HF-Leistung und einer geringen Dämpfung. Aus diesem Grund weist der HF-Generator vorzugsweise auch eine Ausgangsimpedanz von 50 Ω auf. Mit Hilfe eines Anpassglieds wird die Lastimpedanz, gebildet durch die Elektroden und die zu siegelnden Lagen des Laminats an die Ausgangsimpedanz des HF-Generators angepasst.

Sofern der HF-Generator der Hochfrequenzspannungsversorgung mit der ersten Elektrode elektrisch leitend verbunden ist, kann die Höhe der zwischen der zweiten Elektrode und der mindestens einen Gegenelektrode anliegenden HF-Spannung dadurch reduziert werden, dass die zweite Elektrode kapazitiv mit der ersten Elektrode gekoppelt ist.

Sofern der HF-Generator der Hochfrequenzspannungsversorgung mit der zweiten Elektrode elektrisch leitend verbunden ist, kann die Höhe der zwischen der ersten Elektrode und der mindestens einen Gegenelektrode anliegenden HF-Spannung dadurch erhöht werden, dass die erste Elektrode induktiv mit der zweiten Elektrode gekoppelt ist.

In einer dritten Ausgestaltung der Hochfrequenzspannungsversorgung ist der HF-Generator zur Erzeugung von mindestens zwei in der Höhe voneinander abweichenden hochfrequenten Spannungen geeignet, wobei ein Ausgang des HF-Generators elektrisch leitend mit der mindestens einen Gegenelektrode, ein Ausgang mit der niedrigeren HF-Spannung elektrisch leitend mit der zweiten Elektrode und ein Ausgang mit der höheren HF-Spannung elektrisch leitend mit der ersten Elektrode verbunden ist.

In einer Ausgestaltung der Erfindung liegt jeder Elektrode des ersten Siegelelementes eine separate Gegenelektrode derart gegenüber, dass jeweils zwei flächengleiche Oberflächen der Elektroden im Abstand und parallel zueinander liegen.

In einer Ausgestaltung der Erfindung weist ein an mindestens einem Laminat zur Anlage bringbarer Teilbereich der Oberfläche der ersten und/oder der zweiten Elektrode und/oder der Gegenelektrode eine nicht glatte Oberflächenstruktur auf. Diese Strukturierung kann beispielsweise in Form einer vertikalen Rillung eines Teilbereichs der Elektroden ausgeführt sein. Die Strukturierung hat einen mechanischen und einen elektrischen Effekt. In mechanischer Hinsicht wird durch die Strukturierung bewirkt, dass das Material der zu siegelnden Laminate in die Vertiefungen der Strukturierung, insbesondere der Rillen eindringt. In elektrischer Hinsicht bewirkt die Strukturierung eine lokale Erhöhung der Stärke des erzeugten Wechselfeldes. Teilbereiche der Oberfläche einer Elektrode werden insbesondere dann strukturiert, wenn in einem Teilbereich des Siegelbereichs lokal eine nochmals erhöhte Leistung benötigt wird, um beispielsweise fünf anstelle von vier Lagen des Laminats heißzuversiegeln. Ein lokaler Anstieg der Anpresskraft durch die größere Anzahl von Lagen wird weitgehend durch den mechanischen Effekt der Strukturierung vermieden.

Das erste und zweite Versiegelungselement umfassen zum Zusammenpressen der Lagen des Laminats jeweils einen Pressbalken. Vorzugsweise ist einer der Pressbalken statisch und der andere als relativ zu dem statischen Pressbalken beweglicher Pressbalken ausgeführt.

Die ersten und zweiten Elektroden sind vorzugsweise vertikal übereinander angeordnet und horizontal voneinander getrennt. Vorzugsweise erstreckt sich die obere Elektrode weiter in Richtung der Gegenelektrode als die darunter angeordnete Elektrode, um Unterschiede in der Anzahl der heißzuversiegelnden Lagen des Laminats auszugleichen.

An dem ersten Versiegelungselement können mehrere erste und mehrere zweite Elektroden angeordnet sein, so dass eine Mehrzahl von Giebelbehältern gleichzeitig versiegelt werden können.

Nachfolgend wird die Erfindung anhand der Figuren näher erläutert. Es zeigen:

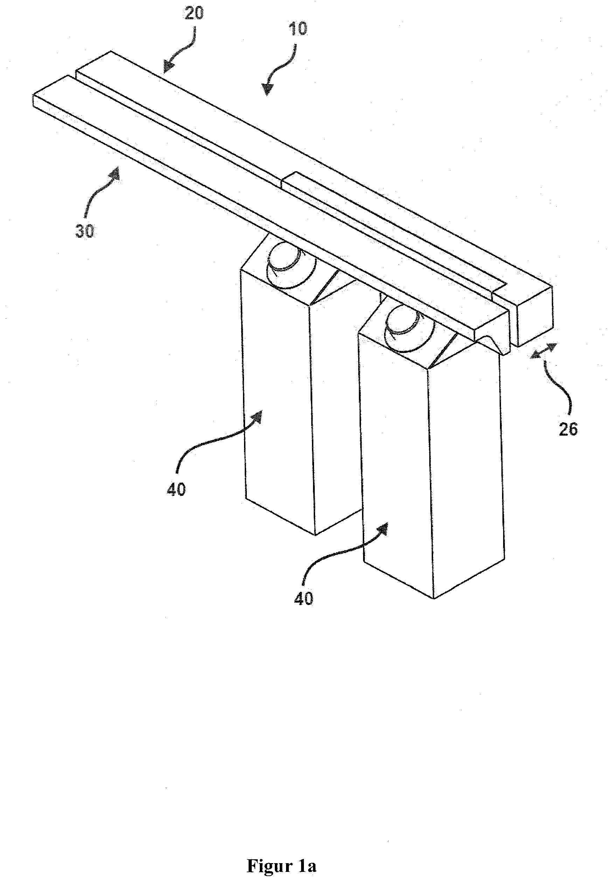

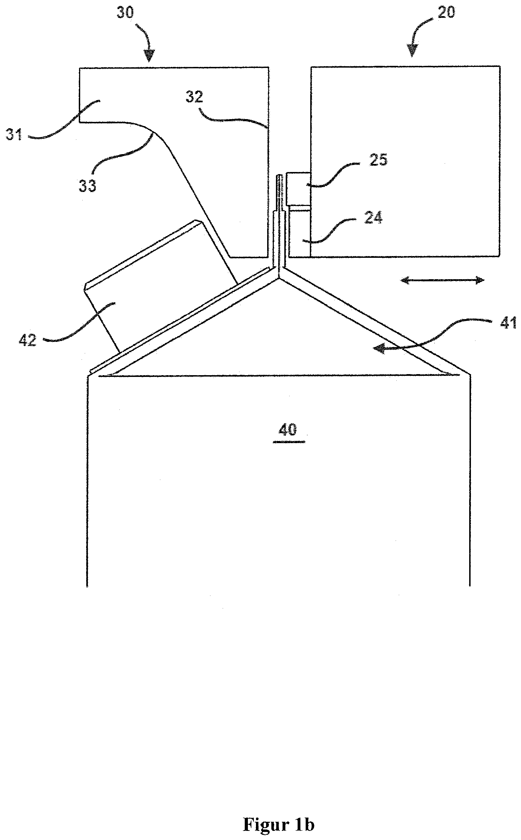

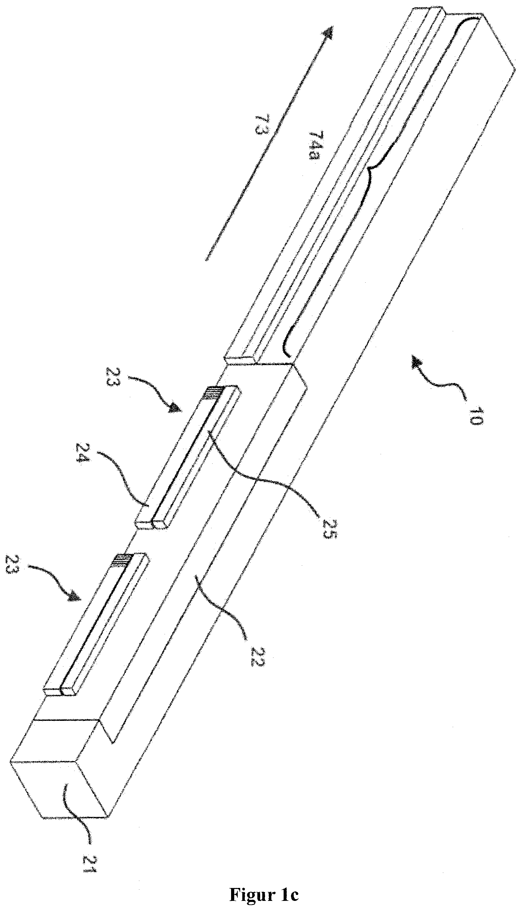

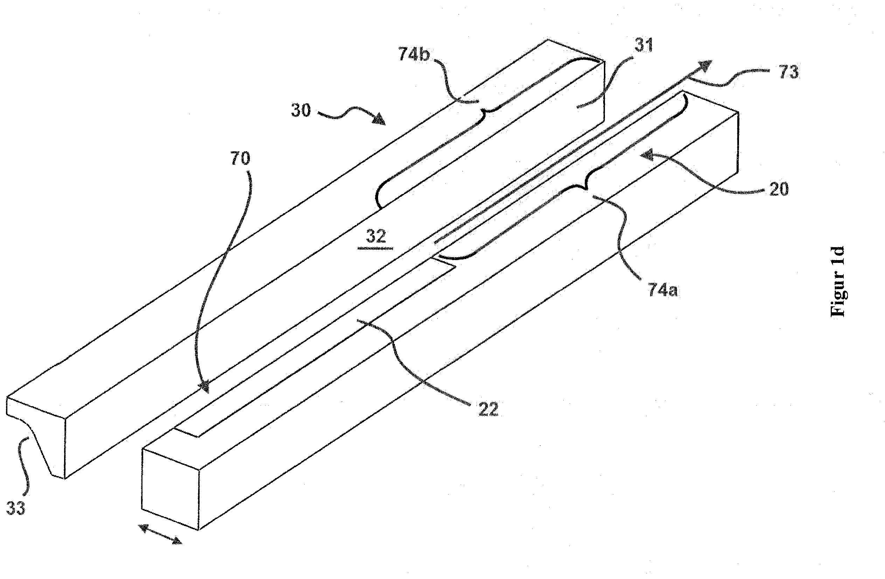

- **Figur 1 a**: eine perspektivische Ansicht eines ersten und zweiten Siegelelementes einer Vorrichtung zum Heißversiegeln mehrerer Lagen eines Laminats einer Giebelverpackung,
- **Figur 1 b**: eine Seitenansicht auf die Siegelelemente nach Figur 1a,
- **Figur 1 c**: eine perspektivische Ansicht des ersten Siegelelementes zur Veranschaulichung der Anordnung der Elektroden,
- **Figur 1 d**: eine perspektivische Ansicht des ersten und zweiten Siegelelementes aus einem anderen Blickwinkel,
- **Figur 2 a**: eine perspektivische Ansicht eines ersten und zweiten Siegelelementes einer zweiten Ausführungsform einer Vorrichtung zum Heißversiegeln mehrerer Lagen eines Laminats einer Giebelverpackung,

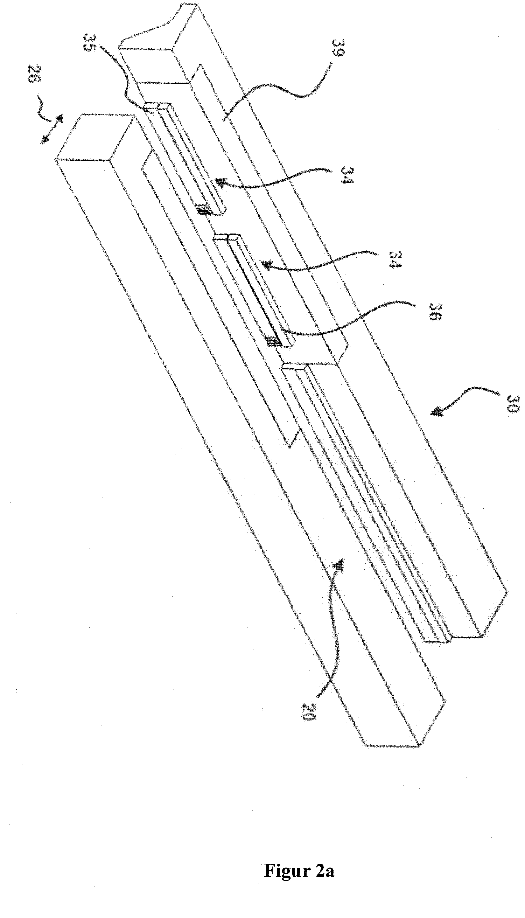

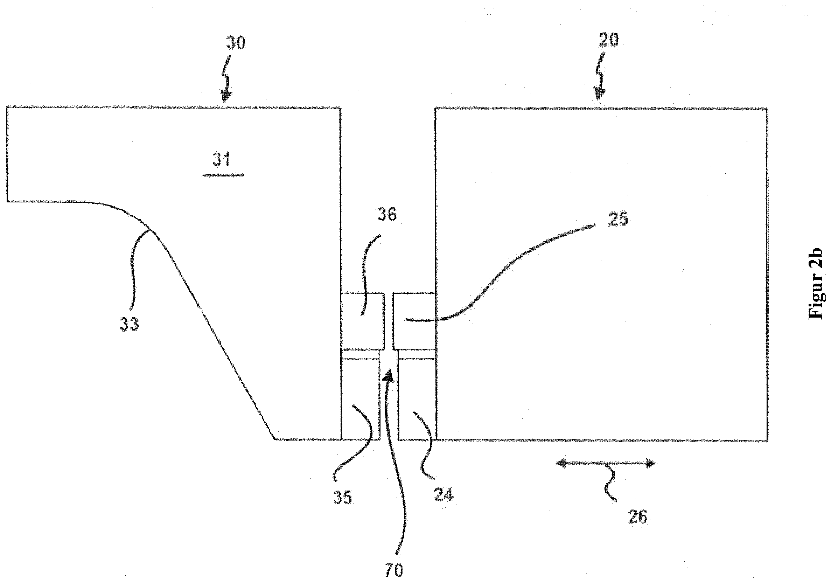

- **Figur 2 b**: eine Seitenansicht auf die Siegelelemente nach Figur 2a,

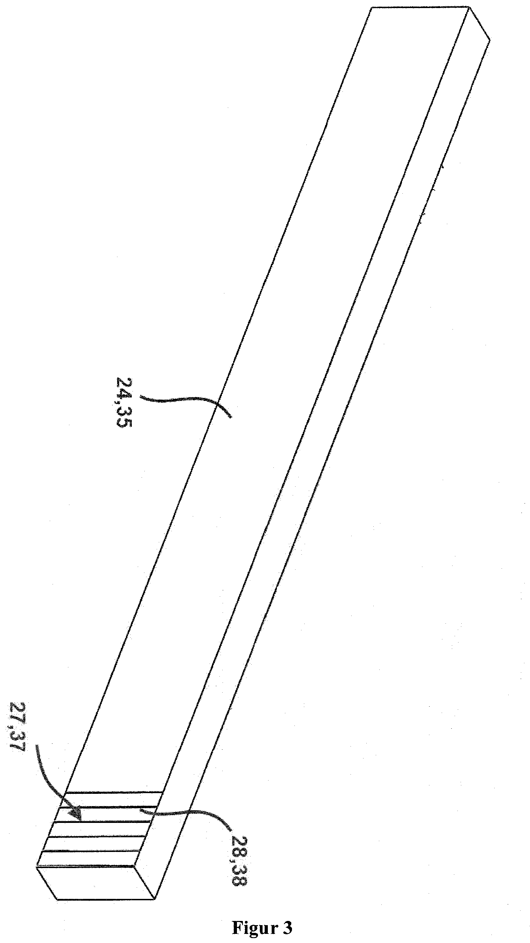

- **Figur 3**: eine Detailansicht einer unteren Elektrode für ein Siegelelement mit einer vertikalen Strukturierung,

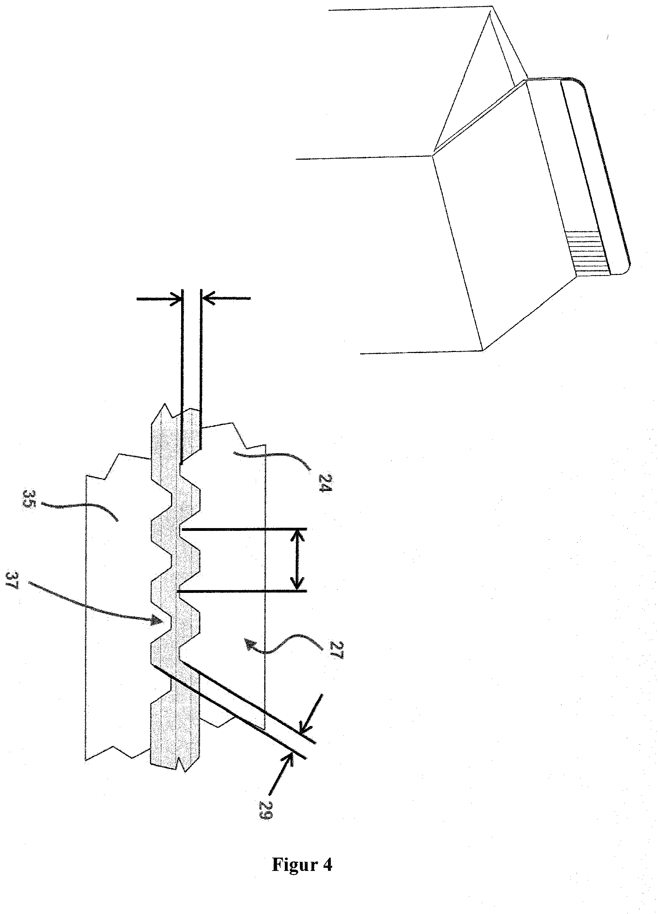

- **Figur 4**: eine Teildarstellung einer Aufsicht auf zwei gegenüberliegende Elektroden mit einer vertikalen Strukturierung,

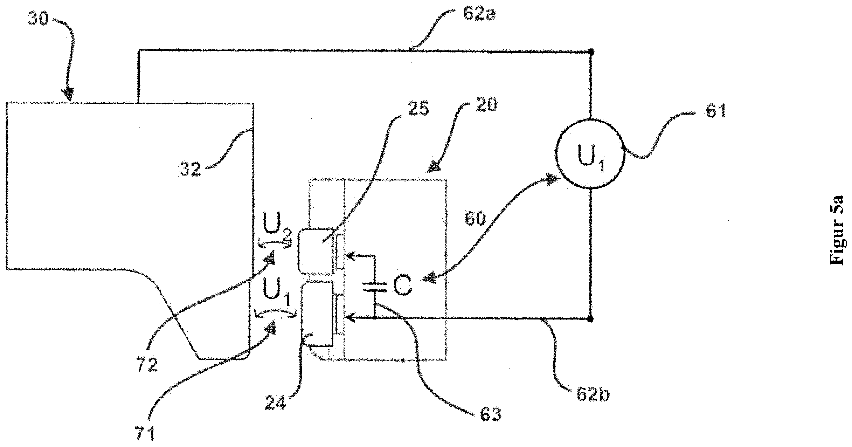

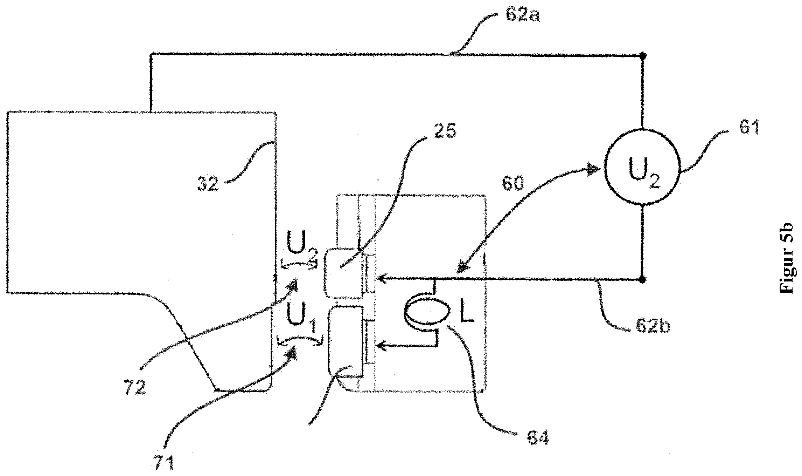

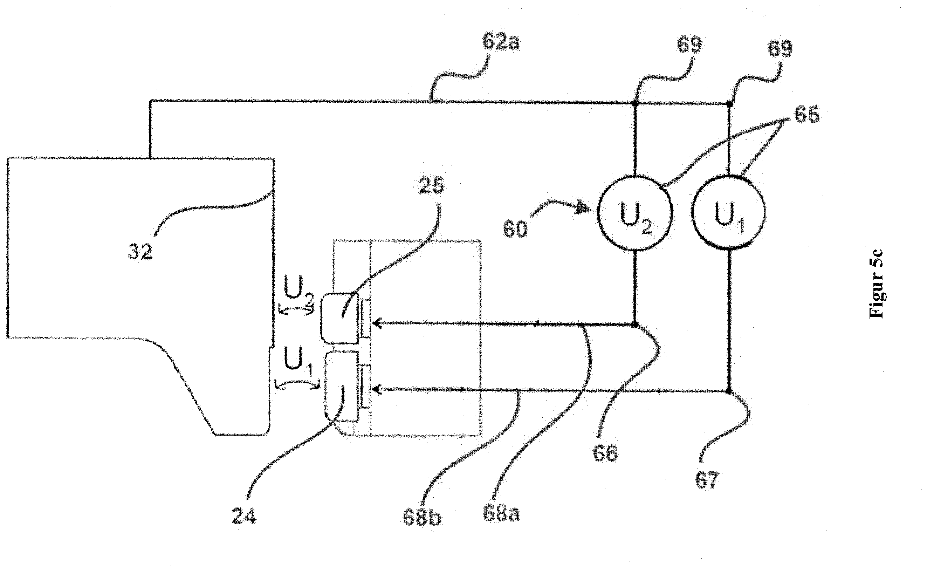

- **Figuren 5 a-c**: unterschiedliche Ausführungsbeispiele einer HF-Spannungsversorgung einer erfindungsgemäßen Vorrichtung sowie

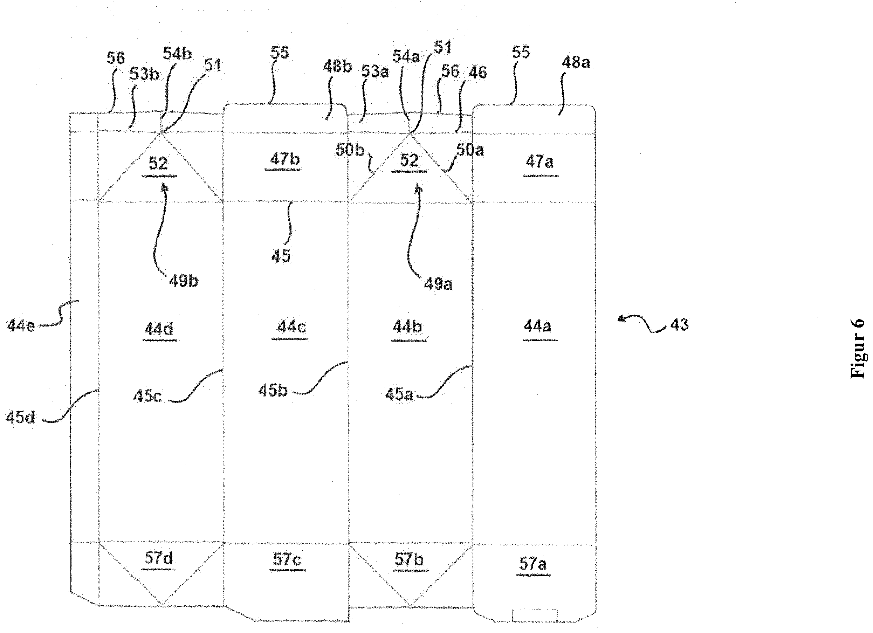

- **Figur 6**: einen Packungszuschnitt zur Herstellung einer Giebelverpackung.

Eine in Figur 1 lediglich teilweise dargestellte Vorrichtung (10) zum Heißversiegeln mehrerer Lagen eines Laminats weist ein erstes, bewegliches Versiegelungselement (20) und ein zweites, dem ersten Versiegelungselement (20) gegenüberliegendes statisches Versiegelungselement (30) auf.

Das erste Versiegelungselement (20) umfasst, wie aus Figur 1c erkennbar, einen im Querschnitt rechteckigen, zylindrischen Pressbalken beispielsweise aus rostfreiem Stahl, in dessen in Figur 1c rechter Hälfte eine Halterung (22) aus elektrisch isolierendem Material eingelassen ist. An der Halterung (22) sind zwei Elektrodenpaare (23) in Längsrichtung des Pressbalkens (21) nebeneinander angeordnet. Jedes Elektrodenpaar (23) wird von einer unteren, ersten Elektrode (24) und einer darüber angeordneten, oberen zweiten Elektrode (25) gebildet. Zwischen den Elektroden (24, 25) und der Halterung (22) kann darüber hinaus eine in den Figuren nicht dargestellte Isolierplatte angeordnet sein. Eine derartige Isolierplatte schützt die Halterung (22) vor Kurzschlüssen und erleichtert die Wartung des ersten Versiegelelementes (10). Die Halterung (22) besteht beispielsweise aus Polyetheretherketon (PEEK)-Material.

Als Antrieb zur Erzeugung der Relativbewegung (26) des ersten Versiegelungselementes (20) zu dem statischen zweiten Versiegelungselement (30) sowie zum Aufbau einer Anpresskraft eignet sich insbesondere ein Linearantrieb, der derart eingerichtet ist, dass das erste Versiegelungselement (20) in Richtung des zweiten Versiegelungselementes (30) und von dem zweiten Versiegelungselement (30) wegbewegbar ist. In Betracht kommt insbesondere ein Druckmittel getriebener Antrieb, insbesondere ein Pneumatik-Zylinder. Das zweite Versiegelungselement (30) wird von einem zylindrischen Körper (31) aus elektrisch gut leitendem Material, zum Beispiel rostfreien Stahl gebildet. Der Körper (31) bildet als Ganzes die Gegenelektrode (32) zu den ersten und zweiten Elektroden (24, 25) des ersten Versiegelungselementes (20). Der zylindrische Körper (31) weist an seiner Unterseite eine Ausnehmung (33) auf, die beim Heißversiegeln des Giebels einer Giebelverpackung (40) Raum für ein an dem Giebel (41) angeordnetes Verschlusselement (42) schafft.

Figuren 2 a und b zeigen ein zweites, statisches Versiegelungselement (30), das abweichend zu dem zweiten Versiegelungselement (30) nach dem Ausführungsbeispiel nach Figur 1 nicht nur eine Gegenelektrode (32), sondern zwei Gegenelektrodenpaare (34) aufweist, die an einer isolierenden Halterung (39) eines Pressbalkens angeordnet sind. Jedes Gegenelektrodenpaar (34) weist eine untere, erste Gegenelektrode (35) und eine obere, zweite Gegenelektrode (36) auf. Wie insbesondere aus Figur 2b erkennbar, sind die ersten und zweiten Gegenelektroden (35, 36) und die ersten und zweiten Elektroden (24, 25) symmetrisch angeordnet, so dass jeder vertikalen Oberfläche einer ersten und zweiten Elektrode (24, 25) eine gleichgroße vertikale Oberfläche der ersten bzw. zweiten Gegenelektrode (35, 36) gegenüberliegt.

Um den Anpressdruck in dem Siegelbereich (70) auf sämtliche Lagen des Laminats zu vergleichmäßigen, ragen die oberen, zweiten Elektroden (25) weiter in Richtung des zweiten Versiegelungselementes (30). Bei der Ausführungsform nach Figur 2 ragen zusätzlich die zweiten Gegenelektroden (36) der Gegenelektrodenpaare (34) weiter in Richtung des ersten Versiegelungselementes (20).

Zwischen den Elektroden (24, 25) und der mindestens einen Gegenelektrode (32, 35, 36) befindet sich der Siegelbereich (70) zum Heißversiegeln mehrerer Lagen des Laminats. Um nach dem Zusammenpressen der mehreren Lagen des Laminats in dem Siegelbereich (70) die Wärme in die Versiegelungsschicht des Laminats einzuleiten, ist eine Hochfrequenz-Spannungsversorgung (60) (vgl. Figur 5) erforderlich, die die Elektroden (24, 25) und jede Gegenelektrode (32, 34, 35) mit einer Hochfrequenzspannung versorgt.

Figur 5a zeigt eine Hochfrequenz-Spannungsversorgung (60) mit einem HF-Generator (61) zur Erzeugung einer Hochfrequenz-Spannung, die mit der einzigen Gegenelektrode (32) über eine erste elektrische Leitung (62 a) und mit der ersten Elektrode (24) über eine zweite elektrische Leitung (62 b) verbunden ist. Weiter weist die Hochfrequenz-Spannungsversorgung (60) eine kapazitive Kopplung (63) in Form eines Kondensators zwischen der ersten Elektrode (24) und der zweiten Elektrode (25) auf. Hierdurch wird das elektrische Wechselfeld in einem ersten Teilbereich (71) des Siegelbereichs (70) mit einer höheren Spannung (U1) und resultierend daraus höheren HF-Leistung und in einem zweiten Teilbereich (72) des Siegelbereichs (70) mit einer geringeren Spannung (U2) und daraus resultierend geringeren Leistung erzeugt, so dass sich eine unterschiedliche Wärmeverteilung in den Teilbereichen (71, 72) des Siegelbereichs (70) ergibt. In dem zweiten Teilbereich (72) wird, wie insbesondere aus Figur 1b erkennbar, eine geringere Anzahl von Lagen des Laminats heiß versiegelt, als in dem ersten Teilbereich (71) des Siegelbereichs.

Figur 5b zeigt eine alternative Ausführungsform einer Hochfrequenz-Spannungsversorgung (60) mit einem HF-Generator (61) zur Erzeugung einer Hochfrequenz-Spannung, die mit der einzigen Gegenelektrode (32) über eine erste elektrische Leitung (62 a) und mit der zweiten Elektrode (25) über eine zweite elektrische Leitung (62 b) verbunden ist. Weiter weist die Hochfrequenz-Spannungsversorgung (60) eine induktive Kopplung (64) in Form einer Spule zwischen der zweiten Elektrode (25) und der ersten Elektrode (24) auf. Hierdurch wird das elektrische Wechselfeld in einem zweiten Teilbereich (72) des Siegelbereichs (70) mit einer niedrigeren Spannung (U2) des HF-Generators (61) und resultierend daraus niedrigeren HF-Leistung und in einem zweiten Teilbereich (72) des Siegelbereichs (70) mit einer höheren Spannung (U1) und daraus resultierend höheren Leistung erzeugt, so dass sich eine unterschiedliche Wärmeverteilung in den Teilbereichen (71, 22) des Siegelbereichs (70) ergibt.

Figur 5c zeigt eine weitere Ausführungsform einer Hochfrequenz-Spannungsversorgung (60), die einen HF-Generator (65) zur Erzeugung von zwei in der Höhe voneinander verschiedenen HF-Spannungen (U1, U2) aufweist. Die Ausgangsklemme (66), die die niedrigere Spannung (U2) führt, ist über eine Leitung (68a) unmittelbar mit der zweiten Elektrode (25) und die Ausgangsklemme (67), die die höhere Spannung (U1) führt, über eine Leitung (68b) unmittelbar mit der ersten Elektrode (24) des ersten Versiegelungselementes (20) elektrisch leitend verbunden. Die Gegenelektrode (32) ist über die Leitung (62a) mit den Ausgangsklemmen (69) des HF-Generators (65) verbunden.

In einer Ausführungsform der Erfindung weist jede erste Elektrode (24) und im Ausführungsbeispiel nach Figur 2a zusätzlich jede erste Gegenelektrode (35) einen an den Laminaten zur Anlage bringbaren Teilbereich (27, 37) der Oberfläche der ersten Elektrode (24) bzw. der ersten Gegenelektrode (35) auf, der mit einer insbesondere deutlich aus Figur 3 erkennbaren vertikalen Rillenstruktur (28, 38) versehen ist. Die Teilbereiche (27, 37) der ersten Elektrode (24) und der ersten Gegenelektrode (35) liegen sich flächengleich gegenüber. Die Rillenstrukturen (28, 38) bewirken eine lokale Erhöhung der Feldkonzentration des elektrischen Wechselfeldes in dem ersten Teilbereich (71). Die Rillenstrukturen (28, 38) sind vorzugsweise an den Faserverlauf des Laminats angepasst.

Die Rillenstrukturen (28, 38) sind derart an der ersten Elektrode (24) bzw. ersten Gegenelektrode (35) angeordnet, dass beim Zusammenpressen der Lagen des Laminats in dem Siegelbereich (70) stets ein Restabstand (29) zwischen den sich gegenüberliegenden strukturierten Teilbereichen (27, 37) verbleibt, wie dies in Figur 4 erkennbar ist. Der Mindestabstand (29) gewährleistet, dass die Lagen des Laminats beim Zusammenpressen nicht beschädigt werden. Insbesondere bei einem Laminat mit Karton als Trägermaterial besteht die Gefahr, dass die Kartonfasern geschert und zerrissen werden.

Das erfindungsgemäße Verfahren kommt insbesondere zum Heißversiegeln des Giebels einer Giebelverpackung (40) zur Aufnahme flüssiger Lebensmittel zum Einsatz. Daher wird zunächst anhand von Figur 6 der Aufbau eines Zuschnitts (43) für einen Packungsmantel zur Herstellung einer derartigen Giebelverpackung (40) näher erläutert:
Die vier Wände (44a-d) des Packungsmantels sind an einer der vier vertikalen Knickkanten (45a-d) in einem schmalen Überlappungsbereich (44e) miteinander verschweißt und weisen eine obere horizontal verlaufende Hauptknickkante (45) sowie eine oberhalb der Hauptnickkante (45) angeordnete horizontal verlaufende Giebelknickkante (46) auf. Die Bereiche der gegenüberliegenden Wände (44a, 44c) des aufgerichteten Packungsmantels zwischen der Hauptknickkante (45) und der Giebelknickkante (46) bilden die Dachfläche (47a, b) des Giebels (41). Die beiden Bereiche der gegenüberliegenden Wände (44a, 44b) oberhalb der Giebelknickkante (46) bilden zwei Siegelfinnen (48a, 48b).

Die Bereiche der anderen gegenüberliegenden Wände (44b, 44d) zwischen der Hauptknickkante (45) und der Giebelknickkante (46) bilden die beiden Stirnflächen (49a, 49b) des Giebels (41). Jede Stirnfläche (49a, b) weist zwei diagonal verlaufende Knickkanten (50a, b) auf, die von der Hauptknickkante (45) aus in einem in der Giebelknickkante (46) liegenden Punkt (51) zusammenlaufen und einen Zwickel (52) begrenzen. Die beiden Bereiche der gegenüberliegenden Wände (44b, 44d) oberhalb der Giebelknickkante (46) bilden zwei stirnseitige Siegelabschnitte (53a, b). Jeder der beiden Siegelabschnitte (53a, b) wird durch eine vertikal verlaufende Giebelknickkante (54a, b) in zwei gleichgroße Teile unterteilt. Der obere horizontal verlaufende Rand (55) der beiden Siegelfinnen (48a, b) überragt den oberen horizontal verlaufenden Rand (56) der beiden stirnseitigen Siegelabschnitte (53a, b).

Der im Überlappungsbereich (44e) mit der Wand (44a) bereits verschweißte Zuschnitt wird als flach gefalteter Packungsmantel einem Magazin einer Füllmaschine für flüssige Lebensmittel zugeführt. Nach dem Entnehmen des flach gefalteten Packungsmantels aus dem Magazin wird der Packungsmantel zu einer im Querschnitt rechteckigen Hülse aufgerichtet. Nach dem Ausbilden des Behälterbodens aus den Bodenflächen (57a-b), dem Sterilisieren der oben offenen Giebelverpackung sowie dem anschließenden Befüllen mit dem Füllgut gelangt die befüllte Giebelverpackung in den Wirkungsbereich der Vorrichtung (10) zum Verschließen des Giebels (41) durch Heißversiegeln.

Zwischen den Versiegelungselementen (20, 30) werden die sich gegenüberliegenden Siegelfinnen (48a, b) und jeweils die beiden Teile der Siegelabschnitte (53a, b) in dem Siegelbereich (70) zusammengepresst. Die beiden Zwickel (52) der Stirnflächen (49a, b) des Giebels (41) sind um die Hauptknickkante (45) nach innen geklappt. Dabei liegt das Laminat zur Herstellung der Giebelverpackung (40) in dem den oberen Rand (56) der Siegelabschnitte (53a, b) überragenden Teil der Siegelfinnen (48a, b) in zwei Lagen und in dem Teil der Siegelabschnitte (53 a, b) zwischen der Giebelknickkante (46) und dem oberen Rand (56) in vier und in dem Überlappungsbereich (44e) zwischen der Giebelknickkante (46) und dem oberen Rand (46) in fünf Lagen übereinander.

Die zwei Lagen des Laminats befinden sich in dem zweiten Teilbereich (72) des Siegelbereichs (70). Die vier bzw. fünf Lagen befinden sich in dem ersten Teilbereich (71) des Siegelbereichs (70).

Aufgrund der Anordnung von zwei Elektrodenpaaren (23) an dem ersten Siegelelement (20) können zwei in Längsrichtung der Versiegelungselemente (20, 30) nebeneinander angeordnete Giebelverpackungen (40) gleichzeitig in einem Arbeitsgang heiß versiegelt werden.

Das elektrische Wechselfeld in dem ersten Teilbereich (71) des Siegelbereichs (70) wird mit einer höheren Leistung erzeugt, als das elektrische Wechselfeld in dem zweiten Teilbereich (72) des Siegelbereichs (70), in dem sich lediglich zwei Lagen gegenüberliegen. Die fünf Lagen des Laminats werden in dem ersten Teilbereich (71) von den strukturierten Teilbereichen (37, 38) der Elektroden (24, 35) zusammengepresst und dort mit lokal erhöhter Feldkonzentration heißversiegelt. Altenativ könnte in dem Bereich, in dem sich 5 Lagen befinden, das Wechslefeld mit einer gegenüber dem ersten Teilbereich (71), in dem sich 4 Lagen befinden, nochmals erhöhten Leistung erzeugt werden, um dort gezielt mehr Wärme einzubringen.

Nach dem Heißversiegelungsprozess werden die verschlossenen Giebelverpackungen (40) von einem nicht dargestellten Förderer aus dem Siegelbereich (70) taktweise in Förderrichtung (73) (vgl. Figur 1) weiter transportiert, bis die nächsten beiden Giebelverpackungen (40) mit ihren Giebeln (41) in den Siegelbereich (70) zwischen das erste und zweite Versiegelungselement (20, 30) gelangen. Die bereits verschlossenen Giebelverpackungen (40) befinden sich zu diesem Zeitpunkt in einem Kühlbereich (74a, b) zwischen den Versiegelungselementen (20, 30), in dem die zuvor heiß versiegelten Lagen des Laminats erneut zusammengepresst werden. Zur raschen Wärmeabfuhr können in dem Kühlbereich Kanäle für einen zirkulierenden Wärmeträger vorgesehen sein, die in dem ersten und/oder dem zweiten Versiegelungselement (20, 30) angeordnet sind.

Darüber hinaus können zur Temperierung in dem Siegelbereich (70) Kanäle für einen zirkulierenden Wärmeträger vorgesehen sein, die in dem ersten und/oder dem zweiten Versiegelungselement (20, 30) angeordnet sind. Hierdurch wird bei der Erzeugung der Wärme für den Heißsiegelprozess eine unnötige Wärmeabgabe von den Elektroden an die Pressbalken der Versiegelungselemente (20, 30) vermieden. Zu diesem Zweck kann der Siegelbereich (70) beispielsweise auf einer konstanten Temperatur von 30° C gehalten werden. Alternativ kann eine elektrische Widerstandsheizung in dem Pressbalken zur Vorwärmung angeordnet sein. Der Kühlbereich wird beispielsweise auf 5°C temperiert, um dort einen raschen Kühleffekt zu erzielen.

**Bezugszeichenliste**

| **Nr.** | **Bezeichnung** | **Nr.** | **Bezeichnung** |
|---|---|---|---|
| **10** | **Vorrichtung** | 48a-b | Siegelfinne |
| **20** | **erstes Versiegelungselement** | 49a-b | Stirnflächen |
| 21 | Pressbalken | 50a-b | diagonale Knickkanten |
| 22 | Halterung | 51 | Punkt |
| 23 | Elektrodenpaare | 52 | Zwickel |
| 24 | erste Elektrode | 53a-b | Siegelabschnitte |
| 25 | zweite Elektrode | 54a-b | Giebelknickkante |
| 26 | Relativbewegung | 55 | oberer Rand |
| 27 | Teilbereich | 56 | oberer Rand |
| 28 | Rillenstruktur | 57a-d | Bodenflächen |
| 29 | Mindestabstand | **60** | **HF-Spannungsversorgung** |
| **30** | **zweites Versiegelungselement** | 61 | HF-Generator |
| 31 | Körper | 62a-b | elektrische Leitungen |
| 32 | Gegenelektrode | 63 | kapazitive Kopplung |
| 33 | Ausnehmung | 64 | induktive Kopplung |
| 34 | Gegenelektrodenpaare | 65 | HF-Generator |
| 35 | erste Gegenelektrode | 66 | Ausgangsklemme |
| 36 | zweite Gegenelektrode | 67 | Ausgangsklemme |
| 37 | Teilbereich | 68a | Leitung |
| 38 | Rillenstruktur | | |
| 39 | Halterung | **70** | **Siegelbereich** |
| **40** | **Giebelverpackung** | 71 | erster Teilbereich |
| 41 | Giebel | 72 | zweiter Teilbereich |
| 42 | Verschlusselement | 73 | Förderrichtung |
| 43 | Zuschnitt | 74a-b | Kühlbereich |
| 44a-d | Wände | | |
| 44e | Überlappungsbereich | | |
| 45a-d | Vertikale Knickkanten | | |
| 45 | Hauptknickkante | | |
| 46 | Giebelknickkante | | |
| 47a-b | Dachflächen | | |

## Patentansprüche

1. Verfahren zum Heißversiegeln mehrerer Lagen eines Laminats in einem Siegelbereich (70), wobei das Laminat eine Trägerschicht aus elektrisch nicht leitendem Material und eine Versiegelungsschicht aus thermoplastischem Material an mindestens einer Oberfläche des Laminats umfasst und in dem Siegelbereich (70) die Versiegelungsschichten von mehreren Lagen des Laminats einander zugewandt sind, umfassend die Schritte:
- Zusammenpressen der Lagen des Laminats in dem Siegelbereich (70),
- Erzeugen eines hochfrequenten elektrischen Wechselfeldes in dem Siegelbereich (70) der zusammengepressten Lagen des Laminats, so dass die Versiegelungsschichten bis in den schmelzflüssigen Zustand erwärmt werden,
**dadurch gekennzeichnet,**
- **dass** das elektrische Wechselfeld in einem ersten Teilbereich (71) des Siegelbereichs (70) mit einer ersten Leistung und in mindestens einem zweiten Teilbereich (72) des Siegelbereichs (70) mit einer von der ersten Leistung abweichenden zweiten Leistung erzeugt wird, so dass sich eine unterschiedliche Wärmeverteilung über die Teilbereiche (71, 72) des Siegelbereichs (70) ergibt.

2. Verfahren nach Anspruch 1, **dadurch gekennzeichnet, dass** in dem ersten und jedem zweiten Teilbereich (71, 72) eine unterschiedliche Anzahl von Lagen des Laminats heißversiegelt werden.

3. Verfahren nach Anspruch 2, **dadurch gekennzeichnet,** das die Leistung zur Erzeugung des elektrischen Wechselfeldes in jedem Teilbereich (71, 72) in Abhängigkeit von der Anzahl und/oder Dicke der Lagen bestimmt wird, die in dem Teilbereich heißversiegelt werden.

4. Verfahren nach Anspruch 2 oder 3, **dadurch gekennzeichnet,** das die Leistung zur Erzeugung des elektrischen Wechselfeldes in jedem Teilbereich (71, 72) in Abhängigkeit von einer in jedem Teilbereich während des Heißsiegelns erfassten Temperatur bestimmt wird.

5. Verfahren nach einem der Ansprüche 1 bis 4, **dadurch gekennzeichnet, dass** die Kraft zum Zusammenpressen der Lagen des Laminats während des Heißsiegelns konstant gehalten wird.

6. Verfahren nach einem der Ansprüche 1 bis 5, **dadurch gekennzeichnet, dass** die Lagen des Laminats in jedem Teilbereich (71, 72) des Siegelbereichs (70) mit übereinstimmendem Anpressdruck zusammengepresst werden.

7. Verfahren nach einem der Ansprüche 1 bis 5, **dadurch gekennzeichnet, dass** das hochfrequente elektrische Wechselfeld in einem Frequenzband zwischen 3 MHz und 300 MHz erzeugt wird.

8. Vorrichtung zum Heißversiegeln mehrerer Lagen eines Laminats, das eine Trägerschicht aus elektrisch nicht leitendem Material und einer Versiegelungsschicht aus thermoplastischem Material an mindestens einer Oberfläche des Laminats aufweist, umfassend
- ein erstes Versiegelungselement (20), das mindestens eine erste Elektrode (24) und mindestens eine zweite Elektrode (25) aufweist,
- ein zweites Versiegelungselement (30), das mindestens eine Gegenelektrode(32) aufweist,
- einen zwischen den Elektroden (24, 25) und der mindestens einen Gegenelektrode (32) angeordneten Siegelbereich (70) zum Heißversiegeln der Lagen des Laminats,
- einen Antrieb zur Erzeugung einer Relativbewegung der Versiegelungselemente (20, 30) zueinander sowie zum Aufbau einer Anpresskraft auf die Lagen des Laminats in dem Siegelbereich (70),
- eine Hochfrequenz-Spannungsversorgung (60), die derart eingerichtet ist, dass die Höhe der an jeder ersten Elektrode (24) und der mindestens einen Gegenelektrode (32) anliegenden Spannung von der Höhe der an jeder zweiten Elektrode (25) und der mindestens einen Gegenelektrode (32) anliegenden Spannung abweicht.

9. Vorrichtung nach Anspruch 8, **dadurch gekennzeichnet, dass** die Hochfrequenzspannungsversorgung (60) einen HF-Generator (61) zur Erzeugung einer hochfrequenten Spannung aufweist, der mit jeder Gegenelektrode (32) und jeder ersten oder jeder zweiten Elektrode (24, 25) elektrisch leitend verbunden ist.

10. Vorrichtung nach Anspruch 8 oder 9, **dadurch gekennzeichnet, dass** die Hochfrequenzspannungsversorgung (60) eine kapazitive Kopplung (63) zwischen jeder ersten und jeder zweiten Elektrode (24, 25) aufweist.

11. Vorrichtung nach Anspruch 8 oder 9, **dadurch gekennzeichnet, dass** die Hochfrequenzspannungsversorgung (60) eine induktive Kopplung (64) zwischen jeder ersten und jeder zweiten Elektrode (24, 25) aufweist.

12. Vorrichtung nach Anspruch 8, **dadurch gekennzeichnet, dass** die Hochfrequenzspannungsversorgung (60) einen HF-Generator (65) zur Erzeugung von mindestens zwei in der Höhe voneinander abweichenden hochfrequenten Spannungen (U1, U2) aufweist, der mit jeder Gegenelektrode (32) und jeder ersten und jeder zweiten Elektrode (24, 25) elektrisch leitend verbunden ist.

13. Vorrichtung nach einem der Ansprüche 8 bis 12, **dadurch gekennzeichnet, dass** jeder Elektrode (24, 25) eine separate Gegenelektrode (35, 36) gegenüberliegt.

14. Vorrichtung nach einem der Ansprüche 8 bis 13, **dadurch gekennzeichnet, dass** ein an dem Laminat zur Anlage bringbarer Teilbereich (27) der Oberfläche der ersten und/oder der zweiten Elektrode (24, 25) und/oder der Gegenelektrode(n) (32, 35, 36) eine nicht glatte Oberflächenstruktur aufweist.

15. Vorrichtung nach einem der Ansprüche 8 bis 14, **dadurch gekennzeichnet, dass** das erste und/oder zweite Versiegelungselement (20, 30) einen Pressbalken (21) aufweist, an dem mindestens eine Halterung (22) aus isolierendem Material zur Befestigung der Elektroden (24, 25) angeordnet ist.

## Claims

1. A method for heat-sealing multiple plies of a laminate in a sealing region (70), wherein the laminate comprises a carrier layer of electrically nonconductive material and a sealing layer of thermoplastic material on at least one surface of the laminate, and wherein the sealing layers of several plies of the laminate face each other in the sealing region (70), comprising the following steps:
-- pressing the plies of the laminate together in the sealing region (70);
-- generating a high-frequency alternating electric field in the sealing region (70) of the pressed-together plies of the laminate, so that the sealing layers are heated to the molten, fluid state,
**characterized in that**
-- the alternating electric field is generated at a first power level in a first subregion (71) of the sealing region (70) and at a second power level different from the first level in at least one second subregion (72) of the sealing region (70), so that a differentiated heat distribution over the subregions (71, 72) of the sealing region (70) is obtained.

2. A method according to claim 1, **characterized in that** a different number of plies of the laminate are heat-sealed in the first and each second subregion (71, 72).

3. A method according to claim 2, **characterized in that** the power for generating the alternating electric field in each subregion (71, 72) is determined as a function of the number and/or thickness of the plies to be heat-sealed in the subregion.

4. A method according to claim 2 or claim 3, **characterized in that** the power for generating the alternating electric field in each subregion (71, 72) is determined as a function of a temperature detected in each subregion during the heat-sealing.

5. A method according to one of claims 1-4 **characterized in that** the force for pressing the plies of the laminate together is kept constant during the heat-sealing.

6. A method according to one of claims 1-5, **characterized in that** the plies of the laminate are pressed together with the same applied pressure in each subregion (71, 72) of the sealing region (70).

7. A method according to one of claims 1-5, **characterized in that** the high-frequency alternating electric field is generated in a frequency band between 3 MHz and 300 MHz.

8. A device for heat-sealing multiple plies of a laminate comprising a carrier layer of electrically nonconductive material and a sealing layer of thermoplastic material on at least one surface of the laminate, comprising
-- a first sealing element (20) comprising at least one first electrode (24) and at least one second electrode (25);
-- a second sealing element (30) comprising at least one counterelectrode (32);
-- a sealing region (70) for heat-sealing the plies of the laminate arranged between the electrodes (24, 25) and the at least one counterelectrode (32);
-- a drive for producing relative movement of the sealing elements (20, 30) with respect to each other and for building up a pressing force on the plies of the laminate in the sealing region (70); and
-- a high-frequency voltage supply (60), which is set up in such a way that the level of the voltage present at each first electrode (24) and the at least one counterelectrode (32) differs from the level of the voltage present at each second electrode (25) and the at least one counterelectrode (32).

9. A device according to claim 8, **characterized in that** the high-frequency voltage supply (60) comprises an HF generator (61) for generating a high-frequency voltage, which is electrically connected to each counterelectrode (32) and to each first or each second electrode (24, 25).

10. A device according to claim 8 or claim 9, **characterized in that** the high-frequency voltage supply (60) comprises a capacitive coupling (63) between each first and each second electrode (24, 25).

11. A device according to claim 8 or claim 9, **characterized in that** the high-frequency voltage supply (60) comprises an inductive coupling (64) between each first and each second electrode (24, 25).

12. A device according to claim 8 **characterized in that** the high-frequency voltage supply (60) comprises an HF generator (65) for generating at least two high-frequency voltages (U1, U2) different from each other, which generator is electrically connected to each counterelectrode (32) and to each first and each second electrode (24, 25).

13. A device according to one of claims 8-12, **characterized in that** a separate counterelectrode (35, 36) is opposite each electrode (24, 25).

14. A device according to one of claims 8-13, **characterized in that** a subregion (27) of the surface of the first and/or of the second electrode (24, 25) and/or of the counterelectrode(s) (32, 35, 36), namely, a subregion can be brought into contact with the laminate, comprises a surface structure which is not smooth.

15. A device according to one of claims 8-14, **characterized in that** the first and/or the second sealing element (20, 30) comprises a pressing bar (21), on which at least one holder (22) of insulating material is arranged for the attachment of the electrodes (24, 25).

## Revendications

1. Procédé, destiné à thermosceller plusieurs couches d'un stratifié dans une zone de scellage (70), le stratifié comprenant une couche porteuse en une matière non conductrice d'électricité et sur au moins une surface du stratifié, une couche de scellage en un matière thermoplastique et dans la zone de scellage (70,) les couches de scellage de plusieurs strates du stratifié se faisant face, comprenant les étapes :
- de la compression des strates du stratifié dans la zone de scellage (70),
- de la génération d'un champ électrique alternatif à haute fréquence dans la zone de scellage (70) des strates compressées du stratifié, de sorte à chauffer les couches de scellage jusqu'à l'état de fusion,
**caractérisé en ce que**,
- dans une première zone partielle (71) de la zone de scellage (70), on génère le champ électrique alternatif avec une première puissance et dans la deuxième zone partielle (72) de la zone de scellage (70), on le génère avec une deuxième puissance différente de la première puissance, de sorte à obtenir une distribution différente de la chaleur sur les zones partielles (71, 72) de la zone de scellage (70).

2. Procédé selon la revendication 1, **caractérisé en ce que** dans la première et dans chaque deuxième zone partielle (71, 72), on thermoscelle un nombre différent de strates de stratifié.

3. Procédé selon la revendication 2, **caractérisé en ce qu'**on détermine la puissance pour la génération du champ électrique alternatif dans chaque zone partielle (71, 72) en fonction du nombre et/ou de l'épaisseur des strates que l'on thermoscelle dans la zone partielle.

4. Procédé selon la revendication 2 ou 3, **caractérisé en ce qu'**on détermine la puissance pour la génération du champ électrique alternatif dans chaque zone partielle (71, 72) en fonction d'une température relevée dans chaque zone partielle pendant le thermoscellage.

5. Procédé selon l'une quelconque des revendications 1 à 4, **caractérisé en ce que** pendant le thermoscellage, on maintient à une valeur constante la force pour la compression des strates du stratifié.

6. Procédé selon l'une quelconque des revendications 1 à 5, **caractérisé en ce qu'**on compresse le stratifié avec une force de pression concordante dans chaque zone partielle (71, 72) de la zone de scellage (70).

7. Procédé selon l'une quelconque des revendications 1 à 5, **caractérisé en ce qu'**on génère le champ électrique alternatif haute fréquence dans une bande de fréquence comprise entre 3 MHz et 300 MHz.

8. Dispositif, destiné à thermosceller plusieurs strates d'un stratifié qui comporte une couche porteuse en une matière non conductrice d'électricité et sur au moins une surface du stratifié, une couche de scellage en une matière thermoplastique, comprenant :
- un élément de scellage (20), qui comporte au moins une première électrode (24) et au moins une deuxième électrode (25),
- un deuxième élément de scellage (30), qui comporte au moins une contre-électrode (32),
- une zone de scellage (70) placée entre les électrodes (24, 25) et l'au moins une contre-électrode (32), pour le thermoscellage des strates du stratifié,
- un entraînement destiné à créer un déplacement relatif des éléments de scellage (20, 30) l'un par rapport à l'autre, ainsi qu'à générer une force de compression sur les strates du stratifié dans la zone de scellage (70),
- une alimentation en tension à haute fréquence (60) qui est aménagée de telle sorte que la valeur de la tension appliquée sur chaque première électrode (24) et sur l'au moins une contre-électrode (32) diffère de la valeur de la tension appliquée sur chaque deuxième électrode (25) et sur l'au moins une contre-électrode (32).

9. Dispositif selon la revendication 8, **caractérisé en ce que** l'alimentation en tension à haute fréquence (60) comporte un générateur HF (61) destiné à générer une tension à haute fréquence, qui est raccordé de manière à conduire l'électricité sur chaque contre-électrode (32) et sur chaque première ou sur chaque deuxième électrode (24, 25).

10. Dispositif selon la revendication 8 ou 9, **caractérisé en ce que** l'alimentation en tension à haute fréquence (60) comporte un couplage capacitif (63) entre chaque première et chaque deuxième électrode (24, 25).

11. Dispositif selon la revendication 8 ou 9, **caractérisé en ce que** l'alimentation en tension à haute fréquence (60) comporte un couplage inductif (64) entre chaque première et chaque deuxième électrode (24, 25).

12. Dispositif selon la revendication 8, **caractérisé en ce que** l'alimentation en tension à haute fréquence (60) comporte un générateur HF (65) destiné à générer au moins deux tensions à haute fréquence (U1, U2) de valeur différente l'une de l'autre, qui est raccordé de manière à conduire l'électricité sur chaque contre-électrode (32) et sur chaque première et sur chaque deuxième électrode (24, 25).

13. Dispositif selon l'une quelconque des revendications 8 à 12, **caractérisé en ce qu'**au vis-à-vis de chaque électrode (24, 25) se trouve une contre-électrode (35, 36) séparée.

14. Dispositif selon l'une quelconque des revendications 8 à 13, **caractérisé en ce qu'**une zone (27) de la surface de la première et/ou de la deuxième électrode (24, 25) et/ou de la (des) contre-électrode (s) (32, 35, 36) qui est susceptible d'être mise en contact avec le stratifié présente une structure superficielle non lisse.

15. Dispositif selon l'une quelconque des revendications 8 à 14, **caractérisé en ce que** le premier et/ou le deuxième élément de scellage (20, 30) comporte une barre de pressage (21) sur laquelle est placé au moins un support (22) en matière isolante pour la fixation des électrodes (24, 25).
